Europäisches Patentamt

European Patent Office

Office européen des brevets

(19)

(11) EP 1 295 910 A1

(12) **EUROPEAN PATENT APPLICATION**

(43) Date of publication:
26.03.2003 Bulletin 2003/13

(51) Int Cl.7: **C08L 23/12**, H01B 3/44, C08J 9/00

(21) Application number: 01122981.2

(22) Date of filing: 25.09.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Borealis GmbH**
**2323 Schwechat-Mannswörth (AT)**

(72) Inventor: **The designation of the inventor has not yet been filed**

(74) Representative: **Rieberer, Stefan, Dipl.-Ing.**
**VA TECH Patente GmbH & Co**
**Stahlstrasse 21a**
**4020 Linz (AT)**

(54) **Insulating foam composition**

(57)     The invention relates to an insulating foam composition for communication cables with an improved balance of processability, electrical properties and mechanical properties.

Fig. 1:

EP 1 295 910 A1

**Description**

The invention relates to an insulating foam composition for communication cables with an improved balance of processability, electrical properties and mechanical properties.

**Background**

The use of polyolefin compounds for the insulation of cables is well established. For data cable applications an essential requirement is to achieve the specified cable impedance. Foaming the insulation will reduce the dielectric constant and (in order to achieve the required impedance) the insulation diameter. The consequence is a smaller cable giving a higher installed cable density or for a given loading a reduced total heat release in the case of fire.

Traditionally, foamed MDPE or HDPE have been used for telephone cable applications but these products are too soft and can be easily deformed during cable assembly. Polypropylene is harder but more difficult to process. The problem is that linear polymers such as polypropylene have inherently poor melt strength and a stable closed cell structure plus low foam density are difficult to obtain. High molecular weight (MW) polypropylenes have a greater melt strength but are viscous. This causes high extrusion melt temperatures and an uncontrolled reaction of blowing agent with resulting poor cell structure. Low MW polypropylene gives better extrudability but the lack of melt strength results in a poor foam cell structure. An ideal polymer should combine these properties i.e. have good melt strength and processability.

Dieletric Performance. The demands for high performance data cable grow ever more stringent. Greater bandwidth demands ever higher operating frequencies but with these higher frequencies critical performance parameters such as characteristic impedance and cross-talk are much more difficult to satisfy. With higher frequencies the dielectric properties of the insulation start to become significant but it is recognised that geometric consistency remains the key performance parameter.

$$Z_0 = G \frac{1}{\sqrt{\epsilon}} \log \left( \frac{2s}{d} \right)$$

with G= constant, $\in$= permittivity, s= conductor axis separation and d= conductor diameter

The characteristic impedance is a function of dielectric constant and cable geometry. Thus for a given impedance (normally 100 Ohm for structured data cable) and conductor size the insulation diameter is fixed. Smaller cables are desirable for a number of reasons and it is seen that the sole route to achieve this reduction is a corresponding reduction in dielectric constant of the insulation. The dielectric constant of polyethylene is 2.3 and that of air is 1.0. A mixture of polymer and air will achieve values between these limits directly dependent on the resulting insulation density. For larger cables this may be achieved by air spaced constructions (such as disc or cartwheel designs) but for small data cable the only solution is foaming.

Geometry. Consistent impedance is seen to be a function of consistent dieletric constant (eg. foam density) and conductor diameter separation. The achievement of geometrically consistent foam is not facile. Conductor diameter is also a known key factor and over the years considerable effort has been devoted to improving wire diameter consistency. However it is not particularly critical for foam cables (cf. Solid dielectrics) and therefore will not be addressed further.

Data cables are assembled from twisted pairs and so the conductor separation is linked totally to the insulation diameter. The basic need is therefore a consistent diameter of the extruded insulation. Unfortunately, extrusion is just the start of the problem. Assembly of the cable involves passing the insulated conductor through machinery and this may cause abrasion or deformation. The twisting process is extremely delicate as back tension will greatly affect the tightness and hence separation of the conductors. Excess tension during subsequent sheathing and installation will equally affect conductor separation. In effect we are dealing with a crush phenomenon. The key parameters affecting crush performance are tensile strength and hardness which obviously must be maximised in order to achieve optimum results.

Materials. Typical tensile strength and Shore hardness values are shown for the principal polyolefin products (Table 1). It is clear that in terms of tensile properties and Shore hardness Polypropylene (PP) has properties interesting for the application. In addition the dielectric constant is directly related to the density and so to achieve a given specific gravity PP needs less expansion.

Table 1.

| Characteristic Physical Properties of Cable Insulation Polyolefins | | | | | |
|---|---|---|---|---|---|
| **Material** | **Tensile** | **Elongation** | **Shore D** | **Density** | **Melt Temperature** |
| LDPE | 17 | 450 | 45 | 920 | 110 |
| MDPE | 23 | 500 | 53 | 930 | 125 |
| LLDPE | 23 | 600 | 48 | 922 | 125 |
| HDPE | 27 | 600 | 60 | 950 | 130 |
| PP | 36 | 700 | 65 | 910 | 165 |

Of the materials listed above PP is by far the most difficult to process.

Foaming of polyopropylen:

The extrusion of polyolefin foams has been known for some decades. So far, non-crosslinked foams could only be made from low-density polyethylene. Traditionally, foamed PE have been used for telephone cable applications but these products are too soft and can be easily deformed during cable assembly. Polypropylene has a higher rigidity and shape retention, but is more difficult to process, because it has a weak melt strength and melt elasticity. The problem is that linear polymers such as polypropylene have inherently poor melt strength and melt drawability, what permit only low cell growth entailed with low foam density. Otherwise cell collapsing and coalescence happen, what result in a very bad, uneven foam structure with low mechanical strength.

A further problem is the process selection. In a typical extrusion foam process, the polymer is melted , a defined amount of blowing agent is added and mixed with the polymer. The injected gas diffuses in the polymer matrix at a high rate because of the convective diffusion induced in the extrusion barrel at an elevated temperature. When exiting the die, the polymer/blowing agent solution is subjected to decompression. This causes a drop in the solubility of blowing agent in the polymer, which results in bubble formation or foaming. The gaseous phase may be generated by separation of a dissolved gas, vaporization of a volatile liquid, or release of gas from a chemical reaction. Regardless of the type of blowing agent, the expansion process comprises three major steps: nucleation, bubble growth, and stabilization. Nucleation or formation of expandable bubbles begins within the polymer melt that has been supersaturated with the blowing agent. Once a bubble reaches a critical size, it continues to grow as the blowing agent rapidly diffuses into it. This growth will continue until the bubble stabilizes or ruptures.

Today chemically blown insulation is common with some indications that physical foaming is at last making progress. For a Chemical foaming is used for achievement of a density level down to about 0.4 $g/cm^3$ by using of conventional extrusion lines. The decomposition temperature of the blowing agent formulation has to meet to the melt temperature of the PP. In dependence on the type of blowing agent decomposition products are left, which could affect the electrical behaviour of the insulation layers. The use of gas ($CO_2$; $N_2$; hydrocarbones, ....) as blowing agent is an alternative process, which required special equipment relating to gas injection, extruder melting and cooling and die design. But this technology makes possible to achieve a foam density down to 0,05 $g/cm^3$.

Polypropylene has seen some success in the USA as a solid telephone wire insulation. Cellular versions of these products were introduced in the 1980s but usage has been limited to special applications requiring high temperature performance. Attempts to use these products in the data cable application have generally foundered on process difficulties. We are aware of one case where limited success was achieved by physically blending equal proportions of cellular PP and cellular MDPE but such manipulations are by no means commercially desirable.

A solid polyolefin insulated 100 Ohm data cable (MDPE) will normally have an insulation diameter of 0.95 mm on a 0.52 mm (24awg) copper conductor. The diameter of an equivalent foamed cable would be directly linked to the degree of expansion. After consulting a number of cable producers a cable of +/-40% (foam density 0.59) expansion and diameter 0.85mm was defined. This corresponds to an insulation dielectric constant of 1.6. The corresponding capacitance target was 208 pF/m.

**Object of invention**

It is therefore the object of the invention to provide an insulating foam composition for insulating communication cables with an improved balance of processability and electrical properties and mechanical properties, comprising 20 to 95 wt% of unmodified propylene polymers **A** and 5 to 80 wt% of propylene polymers **B**.

The term processability is meant to define the stability of the cable coating process,

This object is achieved by a foam composition where the propylene polymers **B** comprise modified propylene polymers with melt indices of 0.05 to 20 g/10 min at 230 °C/2.16 kg, which modified propylene polymers have strain hardening behavior, whereby the modified propylene polymers are present in the propylene polymers **B** up to 100 wt%, preferably from 20 to 100 wt% and most preferably from 50 to 100 wt% in admixture with unmodified propylene polymers with melt indices of 0.1 to 20 g/10 min at 230 °C/2.16 kg.

**Modified propylene polymers** can be produced by any number of processes, e.g. by treatment of the unmodified propylene polymer with thermally decomposing radical-forming agents and/or by treatment with ionizing radiation, where both treatments may optionally be accompanied or followed by a treatment with bi- or multifunctionally unsaturated monomers, e.g. butadiene, isoprene, dimethylbutadiene or divinylbenzene. Further processes may be suitable for the production of the modified propylene polymer, provided that the resulting modified propylene polymer meets the characteristics of **strain hardening behavior**, which is defined below. Examples of said modified propylene polymers **A** are, in particular:

- polypropylenes modified by the reaction of polypropylenes with bismaleimido com-pounds in the melt (EP 0 574 801 A1; EP 0 574 804 A2),
- polypropylenes modified by the treatment of polypropylenes with ionizing radiation in the solid phase (EP 0 190 889 A2; EP 0 634 454 A1),
- polypropylenes modified by the treatment of polypropylenes with peroxides in the solid phase (EP 0 384 431 A2) or in the melt (EP 0 142 724 A2),
- polypropylenes modified by the treatment of polypropylenes with multifunctional, ethy-lenically unsaturated monomers under the action of ionizing radiation (EP 0 678 527 A2),
- polypropylenes modified by the treatment of polypropylenes with multifunctional, ethylenically unsaturated monomers in the presence of peroxides in the melt (EP 0 688 817 A1; EP 0 450 342 A2)

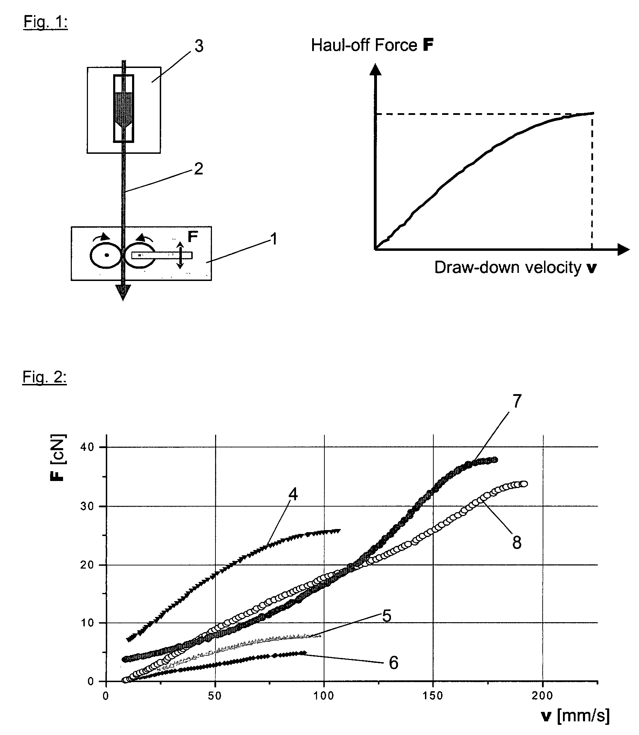

**Strain hardening behavior** as used herein is defined according to Fig. 1 and 2.

Fig. 1 shows a schematic representation of the experimental procedure which is used to determine strain hardening. The strain hardening behavior of polymers is analysed by Rheotens apparatus **1** (product of Götffert, Siemensstr.2, 74711 Buchen, Germany) in which a melt strand **2** is elongated by drawing down with a defined acceleration. The haul-off force F in dependence of draw-down velocity v is recorded.

The test procedure is performed in a standard climatized room with controlled room temperature of T = 23 °C. The Rheotens apparatus **1** is combined with an extruder/melt pump **3** for continuous feeding of the melt strand **2.** The extrusion temperature is 200 °C; a capillary die with a diameter of 2 mm and a length of 6 mm is used and the acceleration of the melt strand **2** drawn down is 120 mm/s$^2$.

The schematic diagram in Figure 1 shows in an exemplary fashion the measured increase in haul-off force **F** (i.e. "melt strength") vs. the increase in draw-down velocity v (i.e. "drawability").

Figure 2 shows the recorded curves of Rheotens measurements of polymer samples with and without strain hardening behavior. The maximum points ($F_{max}$; $v_{max}$) at failure of the strand are characteristic for the strength and the drawability of the melt. The standard propylene polymers **4,5,6** with melt indices of 0.3, 2.0 and 3.0 g/10 min at 230 °C/2.16 kg show a very low melt strength and low drawability. They have no strain hardening.

Modified propylene polymers **7** (melt index of sample in diagram is 2 to 3 g/10 min at 230 °C/2.16 kg) or LDPE **8** (melt index of sample in diagram is 0.7 g/10 min at 230 °C/2.16 kg) show a completely different melt strength vs. drawability behavior. With increasing the draw down velocity v the haul-off force **F** increases to a much higher level, compared to the standard propylene polymers **4,5,6.** This curve shape is characteristic for strain hardening. While polymers **4** and **5** show haul-off $F_{max}$ larger than 5 cN, they do not have strain hardening behavior, because they do not have draw-down velocites $v_{max}$ larger than 150 mm/s.

"Modified propylene polymers which have strain hardening behavior" as used herein have enhanced strength with haul-off forces $F_{max} > 5$ cN and enhanced drawability with draw-down velocities $V_{max} > 150$ mm/s.

**Unmodified propylene polymer** as used herein comprises propylene homopolymers, copolymers of propylene and ethylene and/or $\alpha$-olefins with 4 to 18 carbon atoms and mixtures of the aforementioned polymers.

The term **copolymer** as used above particularly refers to random propylene copolymers, propylene block copolymers, random propylene block copolymers and elastomeric polypropylenes, but is not restricted to these types of copolymers.

By incorporating an amount of propylene polymers with strain hardening behaviour into the insulating foam composition it is possible to finally achieve a cable or wire product which has a uniform foam cell structure and also the required foam density for insulation. The processability will also be satisfactory and the wire surface will be smooth. It may be that the foam density may be the same as for a formulation without high melt strength PP, but homogeneity and quality of the foam is better.

The above property improvements can be achieved with a foam composition containing from 5 to 80 wt% of propylene polymers **B**, preferably 10 to 50 wt%.

With the composition according to the invention foam densities of 0.4 -0.8, preferably of 0.5-0.6 are obtained.

The modified propylene polymers are preferably prepared by

a) mixing a particulate unmodified propylene polymer, which comprises

a1) propylene homopolymers, especially propylene homopolymers with a weight average molecular weight $M_w$ of 500,000 to 1,500,000 g/mol, and/or

a2) copolymers of propylene and ethylene and/or $\alpha$-olefins with 4 to 18 carbon atoms, or of mixtures of such copolymers,

with from 0.05 to 3 wt%, based on the polyolefin composition used, of acyl peroxides, alkyl peroxides, hydroperoxides, peresters and/or peroxycarbonates as free-radical generators capable of thermal decomposition, if desired diluted with inert solvents, with heating to 30-100 °C, preferably to 60-90 °C,

b) sorption of bifunctional unsaturated monomers by the particulate propylene polymer at a temperature T(°C) of from 20 to 120 °C, preferably of from 60 to 100 °C, where the amount of the absorbed bifunctional unsaturated monomers is from 0.01 to 10 wt%, preferably from 0.05 to 2 wt%, based on the propylene polymer used, and then

c) heating and melting the particulate polyolefin composition in an atmosphere comprising inert gas and/or the volatile bifunctional monomers, from sorption temperature to 210 °C, whereupon the free-radical generators capable of thermal decomposition are decomposed and then

d) heating the melt up to 280 °C in order to remove unreacted monomers and decomposition products,

e) agglomerating the melt in a manner known per se.

Usual amounts of auxiliary substances, which may range from 0.01 to 1.5 wt% of stabilizers, 0.01 to 1 wt% of processing aids, 0.1 to 1 wt% of antistatic agents, 0.2 to 3 wt% of pigments and up to 3 wt% of $\alpha$-nucleating agents, in each case based on the sum of the propylene polymers, may be added before step a) and/or e) of the method and/ or before or during step c) and/or d) of the above described method.

The particulate unmodified propylene polymer may have the shape of powders, granules or grit with grain sizes ranging from 0.001 mm up to 7 mm.

The process for producing the modified propylene polymer preferably is a continuous method, performed in continuous reactors, mixers, kneaders and extruders.

Batchwise production of the modified propylene polymer, however is feasible as well.

Preferably volatile bifunctional monomers are absorbed by the particulate propylene polymer from the gas phase.

Practical sorption times $\tau$ of the volatile bifunctional monomers range from 10 to 1000 s, where sorption times $\tau$ of 60 to 600 s are preferred.

The bifunctional unsaturated monomers, which are used in the process for producing the modified propylene polymers preferably are $C_4$ to $C_{10}$ dienes and/or $C_7$ to $C_{10}$ divinyl compounds. Especially preferred are butadiene, isoprene, dimethyl-butadiene or divinylbenzene.

According to a further embodiment of the present invention and in addition to what is defined above, the unmodified propylene polymers **A** are selected from any one or mixtures of

a) conventional polypropylene polymers, preferably propylene homopolymers and/or copolymers of propylene, ethylene and/or $\alpha$-olefins with 4 to 18 carbon atoms, obtainable by using Ziegler-Natta catalysts or metallocene catalysts, having a propylene content of 80.0 to 99.9 wt%, in the form of random copolymers, block copolymers and/or random block copolymers with melt indices of 0.1 to 40 g/10 min at 230 °C/2.16 kg and preferably 1 to 8 g/10 min at 230 °C/2.16 kg,

b) a polyolefin mixture with an Mw/Mn ratio of 2 to 6 and a melt index of 1 to 40 g/10 min at 230 °C/2.16 kg, which comprises

b1) 60 to 98 wt% of a crystalline copolymer of 85 to 99.5 wt% of propylene and 15 to 0.5 wt% of ethylene and/ or an $\alpha$-olefin of the general formula $CH_2=CHR$, in which R is a linear or branched alkyl group with 2 to 8 carbon atoms, and

b2) 2 to 40 wt% of an elastic copolymer of 20 to 70 wt% of ethylene and 80 to 30 wt% of propylene and/or an α-olefin of the general formula $CH_2=CHR$, in which R is a linear or branched alkyl group with 2 to 8 carbon atoms, and

c) essentially amorphous, non isotactic polymers of propylene with a melt index of 0.1 to 100 g/10 min at 230 °C/ 2.16 kg, the essentially amorphous polymers of propylene comprising homopolymers of propylene and/or copolymers of propylene comprising at least 85 wt% of propylene and not more than 15 wt% percent of one or more α-olefins of the general formula $CH_2=CHR$, in which R is a linear or branched alkyl group with 2 to 8 carbon atoms.

According to a further embodiment the insulating composition according to the invention is usable for the production of insulated communication cables, especially data cables and twisted wires.

According to a still further embodiment of the invention a datacable single wire is provided comprising a conductor surrounded by an insulation where the insulation comprises the above described composition.

According to a still further embodiment a telecommunication cable comprising a plurality of datacable single wires each comprising a conductor surrounded by an insulation, said plurality of datacable single wires in turn being surrounded by a sheath is provided, where the insulation of the datacable single comprises the above described composition.

**Examples**

Synthesis of the Modified Propylene Polymer **B**

A powdery polypropylene homopolymer, with a melt index of 0.25 g/10 min at 230 °C/2.16 kg and an average particle size of 0.45 mm, is metered continuously into a continuous mixer. Furthermore, 0.45 wt% based on the propylene homopolymer of tert butyl peroxybenzoate as thermally decomposing free radical forming agent is metered into the mixer. While being mixed homogeneously at 50 °C, the propylene homopolymer containing the tert butyl peroxybenzoate is charged absorptively during a residence time of 7 minutes at 50 °C by means of a mixture of butadiene and nitrogen with 0.135 wt% of butadiene, based on the polypropylene homopolymer. After transfer to a twin screw extruder, the powdery reaction mixture, in contact with the mixture of butadiene and nitrogen, with which it has been charged, is melted at a mass temperature of 230 °C and, after a coarse degassing, subjected to a fine degassing with addition of water as an entraining agent, an additive mixture of 0.1 wt% of tetrakis-(methylene-(3,5-di-t-butylhydroxycinnamate)-methane, 0.1 wt% of tris-(2,4-di-t-butylphenyl)-phosphite), 0.1 wt% of pentaerythritol tetrakis-3-(3,5-di-t-butyl-4-hydroxyphenyl)-propionate and 0.1 wt% of calcium stearate is added to the melt. After distribution of additives the melt is discharged and granulated.

The resulting, modified propylene polymer **B** shows strain hardening behavior characterized by the Rheotens values of $F_{max}$= 30.5 cN and $v_{max}$ = 210 mm/s measured at failure of the strand and a melt index of 2.3 g/10 min at 230 °C/2.16 kg.

A mixture of modified propylene polymer **B** and the respective amount of unmodified propylene polymer **A** and the respective amount of blowing agent (azodicarbonamide) are compounded in a BUSS cokneader PR 46/11 L/ D with a temperature setting of 180°C, homogenized, discharged and pelletized.

These pellets are added to a single screw exctruder (30/20D), where they are molten. Typically a rather flat extruder temperature profile (Z1 - 180 C through to Z5 - 195 C) has been employed. A 0.52 mm copper conductor is fed into the extruder and coated with the melt. After leaving the die head the insulation foams and is subsequently cooled in a cooling trough (water bath).

Comparative examples are prepared similar, however without the use of modified propylene polymer **B**.

**Measurement methods**

**MFR**

MFR- are determined according to ASTM D 1238-D for polypropylene.

**Capacitance**

Capacitance is measured on-line using a standard Zumbach CDR process control system.

**Surface properties**

Surface properties are inspected by visual examination using a 4-grade scale (poor-medium-good-v.good)

**Shore hardness**

Shore hardness (Shore D 15 sec) is determined according to DIN 53456.

**Density**

Foam density measurements are performed according to ISO 845 (Determination of Apparent nominal density).

**Results**

|  | Comparative (Sample 1) | Invention (Sample 2) | Comparative (Sample 3) | Invention (Sample 4) |
|---|---|---|---|---|
| BC245MO [wt%] |  |  | 96 | 84 |
| BD31OMO [wt%] | 85 | 81 |  |  |
| BA110CF [wt%] | 10 |  |  |  |
| Blowing agent [wt%] | 1.5 | 1.3 | 1.3 | 1.3 |
| Propylene polymer **B** (Daploy) [wt%] |  | 15 |  | 12 |
| MFR [g/10 min] | 3.1 | 2.7 | 1.8 | 1.6 |
| Shore D 15 sec | 65 | 65 | 65 | 66 |
|  |  |  |  |  |
| Extrusion temperature (Z4) | 185 | 192 | 186 | 198 |
| Head Pressure, MPa | 308 | 223 | 550 | 354 |
| Wire diameter, mm | 0.86 | 0.85 | 0.88 | 0.87 |
| Capacitance pF/m | 201 | 208.5 | 186 | 198 |
| Surface | medium | v. good | poor | Good |
| Line Speed, m/min | 530 | 500 | 900 | 670 |
| Die - Trough distance, mm | 50 | 300 | 50 | 300 |
| Foam Density | 0.58 | 0.59 | 0.54 | 0.59 |

The amount of blowing agent is based on the total weight of the propylene composition.

Sample 1 is a commercially available PP compound with the high MW component BA110CF intended to improve cell structure. Compared to sample 2 (containing Daploy in place of the BA110CF) a significantly lower head pressure coupled with an improved surface can be seen. In the case of the lower MFR examples (sample 3 & 4) we see the Daploy giving a slight reduction in MFR with a much more significant reduction in head pressure and improved surface. A key difference is the position of the cooling trough which, for the reference products (1 & 3), needs to be close to the die in an attempt to stop the expansion. In spite of this the cables are over expanded. In the case of samples 2 and 4 the position of the cooling trough is less critical and the expansion better controlled.

All unmodified polypropylenes **A** used (BC245MO, BD310MO, BA110CF) are commercial grades which are available from Borealis GmbH.

The polypropylene polymer **B** (Daploy) used is a commercial grade which is also available from Borealis GmbH.

**Claims**

1. Insulating foam composition for communication cables with an improved balance of processability, electrical properties and mechanical properties, comprising 20 to 95 wt% of unmodified propylene polymers **A** and 5 to 80 wt% of propylene polymers **B**, **characterized in that**
the propylene polymers **B** comprise modified propylene polymers with melt indices of 0.05 to 10 g/10 min at 230 °C/2.16 kg, which modified propylene polymers have strain hardening behavior, whereby the modified propylene polymers are present in the propylene polymers **B** up to 100 wt%, preferably from 20 to 100 wt% and most preferably from 50 to 100 wt% in admixture with unmodified propylene polymers with melt indices of 0.1 to 10 g/10 min at 230 °C/2.16 kg.

2. Insulating foam composition according to claim 1, **characterized in that** the modified propylene polymers **B** are prepared by

    a) mixing a particulate unmodified propylene polymer, which comprises

        a1) propylene homopolymers, especially propylene homopolymers with a weight average molecular weight $M_w$ of 500,000 to 1,500,000 g/mol, and/or

        a2) copolymers of propylene and ethylene and/or $\alpha$-olefins with 4 to 18 carbon atoms, or of mixtures of such copolymers,

    with from 0.05 to 3 wt%, based on the polyolefin composition used, of acyl peroxides, alkyl peroxides, hydroperoxides, peresters and/or peroxycarbonates as free-radical generators capable of thermal decomposition, if desired diluted with inert solvents, with heating to 30-100 °C, preferably to 60-90 °C,

    b) sorption of bifunctional unsaturated monomers by the particulate propylene polymer at a temperature T(°C) of from 20 to 120 °C, preferably of from 60 to 100 °C, where the amount of the absorbed bifunctional unsaturated monomers is from 0.01 to 10 wt%, preferably from 0.05 to 2 wt%, based on the propylene polymer used, and then

    c) heating and melting the particulate polyolefin composition in an atmosphere comprising inert gas and/or the volatile bifunctional monomers, from sorption temperature to 210 °C, whereupon the free-radical generators capable of thermal decomposition are decomposed and then

    d) heating the melt up to 280 °C in order to remove unreacted monomers and decomposition products,

    d) agglomerating the melt in a manner known per se.

3. Insulating foam composition according to claim 1, **characterized in that** the unmodified propylene polymers **A** are selected from any one or mixtures of

    a) conventional polypropylene polymers, preferably propylene homopolymers and/or copolymers of propylene, ethylene and/or $\alpha$-olefins with 4 to 18 carbon atoms, obtainable by using Ziegler-Natta catalysts or metallocene catalysts, having a propylene content of 80.0 to 99.9 wt%, in the form of random copolymers, block copolymers and/or random block copolymers with melt indices of 0.1 to 40 g/10 min at 230 °C/2.16 kg and preferably 1 to 8 g/10 min at 230 °C/2.16 kg,
    b) a polyolefin mixture with an Mw/Mn ratio of 2 to 6 and a melt index of 1 to 40 g/10 min at 230 °C/2.16 kg, which comprises

        b1) 60 to 98 wt% of a crystalline copolymer of 85 to 99.5 wt% of propylene and 15 to 0.5 wt% of ethylene and/or an $\alpha$-olefin of the general formula $CH_2=CHR$, in which R is a linear or branched alkyl group with 2 to 8 carbon atoms, and
        b2) 2 to 40 wt% of an elastic copolymer of 20 to 70 wt% of ethylene and 80 to 30 wt% of propylene and/or an $\alpha$-olefin of the general formula $CH_2=CHR$, in which R is a linear or branched alkyl group with 2 to 8 carbon atoms,

    c) essentially amorphous, non isotactic polymers of propylene with a melt index of 0.1 to 100 g/10 min at 230 °C/2.16 kg, the essentially amorphous polymers of propylene comprising homopolymers of propylene and/or copolymers of propylene comprising at least 85 wt% of propylene and not more than 15 wt% percent of one or more $\alpha$-olefins of the general formula $CH_2=CHR$, in which R is a linear or branched alkyl group with 2 to 8 carbon atoms.

4. Use of an insulating composition according to any one of claims 1-3 for the production of insulated communication cables, especially data cables and twisted wires.

5. A datacable single wire comprising a conductor surrounded by an insulation, **characterized in that** the insulation comprises a composition according to any one of claims 1-3.

6. A telecommunication cable comprising a plurality of datacable single wires each comprising a conductor surrounded by an insulation, said plurality of datacable single wires in turn being surrounded by a sheath, **characterized in that** the insulation of the datacable single wires is comprised of a composition according to any one of claims 1-3.

Fig. 1:

Fig. 2:

**European Patent Office**

## EUROPEAN SEARCH REPORT

Application Number

EP 01 12 2981

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 01 60871 A (EQUISTAR CHEM LP) 23 August 2001 (2001-08-23) * page 10, line 17-29 * | 1-6 | C08L23/12 H01B3/44 C08J9/00 |
| A | GB 1 022 051 A (HERCULES POWDER CO LTD) 9 March 1966 (1966-03-09) * page 1, line 28-32 * * claims * | 1 | |

**TECHNICAL FIELDS SEARCHED (Int.Cl.7)**

C08L
H01B
C08J

The present search report has been drawn up for all claims

| Place of search | Date of completion of the search | Examiner |
|---|---|---|
| THE HAGUE | 8 March 2002 | Oudot, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 12 2981

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2002

| Patent document cited in search report | | Publication date | Patent family member(s) | | Publication date |
|---|---|---|---|---|---|
| WO 0160871 | A | 23-08-2001 | US | 6326434 B1 | 04-12-2001 |
| | | | AU | 3472901 A | 27-08-2001 |
| | | | WO | 0160871 A1 | 23-08-2001 |
| GB 1022051 | A | 09-03-1966 | DE | 1544999 A1 | 27-05-1971 |